**Europäisches Patentamt**

**European Patent Office**

**Office européen des brevets**

(11) Veröffentlichungsnummer: **0 507 086 B1**

## (12) EUROPÄISCHE PATENTSCHRIFT

(45) Veröffentlichungstag der Patentschrift: **02.11.94**

(51) Int. Cl.[5]: **C09D 5/44**, C08G 18/24

(21) Anmeldenummer: **92103493.0**

(22) Anmeldetag: **29.02.92**

(54) **Dibutylzinnoxid-Zubereitungen und ihre Verwendung zur Katalysierung der Vernetzungsreaktionen von kationischen Lackbindemitteln.**

(30) Priorität: **05.03.91 AT 459/91**

(43) Veröffentlichungstag der Anmeldung:
**07.10.92 Patentblatt 92/41**

(45) Bekanntmachung des Hinweises auf die
Patenterteilung:
**02.11.94 Patentblatt 94/44**

(84) Benannte Vertragsstaaten:
**BE DE ES FR GB IT NL SE**

(56) Entgegenhaltungen:
**EP-A- 0 261 486**
**GB-A- 2 065 151**
**US-A- 4 981 925**

(73) Patentinhaber: **Vianova Kunstharz Aktiengesellschaft**
**Bundesstrasse 175**
**A-8402 Werndorf (AT)**

(72) Erfinder: **Paar, Willibald, Dr.**
**Schanzelgasse 19**
**A-8010 Graz (AT)**
Erfinder: **Kriessmann, Ingo, Dr.**
**Hilmteichstrasse 75**
**A-8010 Graz (AT)**
Erfinder: **Koch, Walter**
**Dammweg 24**
**A-8402 Graz (AT)**

EP 0 507 086 B1

**Beschreibung**

Die Erfindung betrifft Dibutylzinnoxid-Zubereitungen und ihre Verwendung zur Katalysierung der Vernetzungsreaktionen von kationischen Lackbindemitteln.

Kationische Lackbindemittel, welche insbesondere zur Formulierung von kathodisch abscheidbaren Elektrotauchlacken eingesetzt werden, vernetzen bei erhöhter Temperatur zu einem wesentlichen Teil durch Umurethanisierung, Umesterung oder durch die Reaktion endständiger Doppelbindungen.

Es ist bekannt, daß derartige Vernetzungsreaktionen durch Metallverbindungen katalysiert werden. Eine solche Katalyse ist im Falle der Härtung von kathodisch abgeschiedenen Lackfilmen praktisch in allen Fällen notwendig, um das von den Anwendern in der Industrie geforderte Eigenschaftsbild zu erreichen.

Die wichtigsten in der Praxis verwendeten Katalysatoren sind organische Verbindungen des vierwertigen Zinns, welche beispielsweise als Dibutylzinnoxid, als Dibutylzinndilaurat oder als Umsetzungsprodukte des Dibutylzinnoxids mit Alkoholen oder Phenolen eingesetzt werden. Alle angeführten Katalysatoren weisen jedoch Nachteile auf.

So ist Dibutylzinnoxid eine feste Substanz, welche bereits in einer möglichst feinverteilten Form in den Lackansatz eingebracht werden muß, da es erst in Lösung katalytisch voll wirksam wird. Beim Einsatz dieses Katalysators sind daher längere Homogenisierungszeiten notwendig. Erfolgt die Zerkleinerung, wie das bei Pigmenten und Füllstoffen vielfach üblich ist, durch Anreiben in einem Lackbindemittel, so kann wegen der dabei auftretenden Temperaturbelastung die katalytische Wirkung des Dibutylzinnoxids bereits ausgelöst und das Bindemittel in seiner Reaktivität im unerwünschten Maße vorzeitig aktiviert werden.

Die Verwendung von gegenüber den Bindemitteln inerten Dispergiermedien führt dagegen zu unvernetzten Molekülsegmenten im eingebrannten Film und ist ebenfalls nicht zielführend.

Beim Einsatz von Dibutylzinndilaurat wird durch Hydrolyse Säure freigesetzt, die sich speziell während des Betriebs von Elektrotauchanlagen als störend erweisen kann.

Dibutylzinnoxid und Dibutylzinndilaurat sind mit den verwendeten Lackbindemitteln vielfach nicht vollständig verträglich. Dies beeinträchtigt in vielen Fällen die Lagerfähigkeit, vor allem verdünnter Lacke, die als Nachfüllmaterial bei Elektrotauchanlagen eingesetzt werden.

Umsetzungsprodukte des Dibutylzinnoxids (DBTO) mit Alkoholen oder Phenolen, wie sie in der EP 0 261 486 B1 beschrieben werden, zeigen im gebrauchsfertigen Lack eine ausgezeichnete Verträglichkeit und Stabilität. Bei der Vernetzung der abgeschiedenen Filme bilden sich jedoch bei den dafür erforderlichen Temperaturen Spaltprodukte, die Oberflächenstörungen, wie Nadelstiche oder Krater, im eingebrannten Lackfilm verursachen.

Es wurde nun gefunden, daß eine technisch vorteilhafte Katalysierung der Vernetzungsreaktionen von kathodisch abscheidbaren Lackbindemitteln für Elektrotauchlacke auch mittels Dibutylzinnoxid möglich ist, wenn die mechanische Dispergierung des Dibutylzinnoxids in einer vernetzungsfähige Gruppen tragenden Härtungskomponente erfolgt. Wegen der gleichmäßigen Verteilung des Katalysators im Dispergiermedium können damit die für die Vernetzungsreaktionen erforderlichen Temperaturen herabgesetzt werden.

Die Erfindung betrifft demgemäß Dibutylzinnoxid-Zubereitungen, welche dadurch gekennzeichnet sind, daß sie Dibutylzinnoxid, welches nach mechanischer Dispergierung in einer Teilchengröße von 0,1 bis max. 5 $\mu$m vorliegt, und ein verkapptes Polyisocyanat und/oder eine aktivierte Estergruppen tragende Härtungskomponente als Dispergiermedium, welches gegebenenfalls in einem organischen, gegenüber Dibutylzinnoxid reaktionsinerten Lösemittel angelöst ist, enthalten, wobei die Dibutylzinnoxid-Zubereitungen einen Gehalt an Zinn, bezogen auf den Feststoffanteil des Dispergiermediums, von 5 bis 30 Gew.-%, vorzugsweise von 10 bis 20 Gew.-%, aufweisen.

Die Erfindung betrifft weiters die Verwendung der Dibutylzinnoxid-Zubereitungen zur Katalysierung der Vernetzungsreaktionen von durch Umurethanisierung und/oder Umesterung vernetzbaren kationischen Lackbindemitteln für kathodisch abscheidbare Elektrotauchlacke, sowie die mit den erfindungsgemäßen Dibutylzinnoxid-Zubereitungen katalysierten kationischen Lacke, insbesondere kathodisch abscheidbare Elektrotauchlacke.

Als verkappte Polyisocyanate können im wesentlichen alle filmbildenden Isocyanatverbindungen eingesetzt werden, soferne sie Verkappungsmittel enthalten, die bei Temperaturen bis maximal 50 °C, wie sie für die Herstellung der Dibutylzinnoxid-Zubereitungen eingehalten werden müssen, nicht entblocken.

Beispiele für aktivierte Estergruppen tragende Härtungskomponenten sind u. a. in der AT-PS 379 602 beschrieben.

Zur Einstellung einer vorteilhaften Viskosität für die Handhabung der das Dibutylzinnoxid enthaltenden Zubereitungen sollen Lösungsmittel verwendet werden, die gegenüber Dibutylzinnoxid reaktionsinert sind und eine ausreichende Wassertoleranz aufweisen. Besonders geeignet sind 2,2,4-Trimethylpentandiolmonoisobutyrat (Markenname Texanol) oder die Dialkylether des Di- bzw. Triethylenglykols.

Die Dispergierung des handelsüblichen Dibutylzinnoxids im anspruchsgemäßen Medium erfolgt mit herkömmlichen Mahlaggregaten, wie in Perlmühlen oder auf Dreiwalzen. Die anzustrebende Teilchengröße soll unter 5 μm liegen.

Die Dibutylzinnoxid-Zubereitungen, die einen Gehalt an Zinn, bezogen auf den Festoffanteil des Dispergiermediums, von 5 bis 30 Gew.-%, vorzugsweise von 10 bis 20 Gew.-%, aufweisen, können in konzentrierter Form dem Bindemittel, einem eventuell eingesetzten Pigmentanreibeharz oder der Pigmentpaste zugesetzt werden, wobei gegebenenfalls die Protonierung zusammen mit dem Bindemittel erfolgt. Die Zubereitungen können aber auch, soferne sie protonisierbare Gruppen tragen, in neutralisierter und mit Wasser und/oder Hilfslösemitteln versetzter Form dem verdünnten Lack oder dem Badmaterial während des Betriebes einer Elektrotauchanlage zugegeben werden. Die katalysierten Elektrotauchlacke enthalten 0,1 bis 3,0 Gew.-%, vorzugsweise 0,5 bis 1,5 Gew.-%, Zinn, bezogen auf den Feststoff des Bindemittels, in Form der Dibutylzinnoxid-Zubereitungen.

Die Dibutylzinnoxid-Zubereitungen sind auch in der Kälte mit den Lackbindemitteln einwandfrei verträglich. Wegen des organophilen Charakters des Dispergiermediums verbleibt das Dibutylzinnoxid in der Harzphase des verdünnten Lacks und damit auch im während des Vorgangs der Elektrotauchlackierung durch die Endosmose weitgehend entwässerten Film.

Lackbindemittel, deren Vernetzungsreaktionen durch Umurethanisierung und/oder Umesterung mit Hilfe der erfindungsgemäßen Dibutylzinnoxid-Zubereitungen katalysiert werden können, sind in großer Zahl aus der Literatur bekannt.

Die erfindungsgemäßen Dibutylzinnoxid-Zubereitungen eignen sich in Kombination mit kationischen modifizierten Epoxidharzen insbesondere zur Formulierung von korrosionsbeständigen Grundierungen für Automobile, sowie in Kombination mit kationischen Acrylharzen zur Formulierung von hellfarbigen Einschicht- oder Decklacken für Haushaltsgeräte, wobei wegen der gleichmäßigen Verteilung des Katalysators im Dispergiermedium die für die Vernetzungsreaktionen erforderlichen Temperaturen herabgesetzt werden können.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

(A) Herstellung der Dispergiermedien

(A1): 134 Tle (1,0 Mol) Trimethylolpropan werden in Anwesenheit von 530 Tlen Diethylenglykoldimethylether mit 851 Tlen (2,8 Mol) eines mit 2-Ethylhexanol halbblockierten Toluylendiisocyanats bei 70°C bis zum vollständigen Verbrauch aller Isocyanatgruppen umgesetzt. (Feststoffgehalt 65 Gew.-%)

(A2): 696 Tle (8,0 Mol) Methylethylketoxim werden bei 80°C mit 1554 Tlen (7.0 Mol) Isophorondiisocyanat unter Hinzugabe von 0,2 Tlen Triethylamin als Katalysator bis zum vollständigen Verbrauch aller Isocyanatgruppen umgesetzt (Feststoffgehalt 100 Gew.-%)
(Härtungskomponente analog AT-PS 390 624, Beispiel 3).

(A3): 149 Tle (1,0 Mol) Triethanolamin werden in 500 Tlen Hexanol mit 1008 Tlen (3,0 Mol) eines mit Diethylenglykolmonobutylether halbblockierten Toluylendiisocyanats bei 80°C bis zum vollständigen Verbrauch aller Isocyanatgruppen umgesetzt. (Feststoffgehalt 70 Gew.-%)

(A4): Zu einer Mischung aus 130 g (1 Mol) Acetessigsäureethylester, 0,85 g (0,01 Mol) Piperidin und 0,54 g (0.01 Mol) Ameisensäure (85 %) werden bei 60°C 33 g (1 Mol) Paraformaldehyd (91 %) in 6 Portionen zugegeben. Vor jeder weiteren Zugabe ist die vollständige Lösung des Paraformaldehyds abzuwarten und die Reaktionstemperatur durch Kühlen unter 90°C zu halten. Das Reaktionsgemisch wird nach Zugabe der gesamten Paraformaldehydmenge bei 90°C gerührt, bis diese vollständig gelöst ist. Die Temperatur wird unter einsetzender Wasserabspaltung innerhalb von 2 Stunden auf 140°C erhöht. Nach Erreichen von 140°C werden mit Spezialbenzin (Siedebereich 80 bis 120°C) als Schleppmittel insgesamt 24 g Wasser abdestilliert. Unter Anlegen von Vakuum wird anschließend das eingesetzte Schleppmittel abdestilliert und solange eine Temperatur von 120°C gehalten, bis ein Brechungsindex von n 20/D = 1,4750 erreicht ist. Das Produkt weist einen Feststoffgehalt von ca. 94 Gew.-% auf.
(Umesterungshärter gemäß AT-PS 379 602 Beispiel 2)

(B) Herstellung der Dibutylzinnoxid-Zubereitungen

Entsprechend den in der Tabelle 1 angegebenen Mengenverhältnissen werden das Dispergiermedium und Dibutylzinnoxid (DBTO) homogen vermischt und in einem geeigneten Mahlaggregat, vorzugsweise in einer Perlmühle oder auf einer Dreiwalze, bis zu einer Teilchengröße von ca. 3 μm vermahlen, wobei die

Temperatur der Mahlansätze 50 °C nicht übersteigen soll.

Tabelle 1

| Zubereitung | Dispergiermedium Feststoff | DBTO | Gew.-% Sn (als Metall) |
|---|---|---|---|
| K 1 | 150 Tle (A1) | 100 Tle | 19,1 |
| K 2 | 200 Tle (A2) | 70 Tle | 12,4 |
| K 3 | 100 Tle (A3) | 80 Tle | 21,2 |
| K 4 | 200 Tle (A4) | 55 Tle | 10,3 |

(C) Herstellung der mit den Dibutylzinnoxid-Zubereitungen katalysierten kathodisch abscheidbaren Elektrotauchlacke und deren anwendungstechnische Ausprüfung

Gemäß den in der Tabelle 2 zusammengefaßten Angaben werden pigmentierte Lacke in bekannter Weise hergestellt.

Die mit deionisiertem Wasser auf einen Festkörpergehalt von 20 Gew.-% verdünnten Lacke sind bei Raumtemperatur über einen Zeitraum von 3 Wochen sedimentationsstabil. Die Rührstabilität (Rühren des Lackes im offenen Gefäß bei Raumtemperatur) ist bei allen Lacken nach 8 Wochen in Ordnung, d. h. es sind bei den eingebrannten Lackfilmen keine Veränderungen feststellbar.

Die Lacke werden auf entfettetes Stahlblech elektrisch abgeschieden, wobei die Bedingungen so gewählt werden, daß die Schichtstärke der eingebrannten Filme bei 20 ± 2 μm liegt. Die für die Vernetzung der abgeschiedenen Filme notwendige Einbrenntemperatur ist aus Tabelle 2 ersichtlich; alle vernetzten Filme sind beständig gegenüber 200 Doppelhüben mit Methylethylketon.

Vergleichsbeispiel

Zum Vergleich wurde ein Lack entsprechend Beispiel 5 durch Zugabe von Dibutylzinnoxid zur Bindemittelkombination aus basischem Acrylatcopolymerisat und verkapptem Polyisocyanat (A2) anstelle der Verwendung der erfindungsgemäßen Dibutylzinnoxid-Zubereitung katalysiert. Die für die Filmvernetzung notwendige Einbrenntemperatur beträgt 165 °C.

Tabelle 2

| Bei-spiel | Binde-mittel 1) (100 Tle Festharz) | mMol Amei-sen-säure | Tle Pigment-rezeptur 2) | Tle DBTO-Zubereitung | Gew.-% Sn auf 100 Tle BM | Einbrenn-temp. °C |
|---|---|---|---|---|---|---|
| 1 | BM 1 | 50 | 55 (I) | 3,7 | 0,7 K 1 | 150 |
| 2 | BM 1 | 50 | 50 (I) | 6,5 | 0,8 K 2 | 145 |
| 3 | BM 1 | 50 | 50 (I) | 4,7 | 1,0 K 3 | 150 |
| 4 | BM 2 | 60 | 35 (I) | 5,8 | 0,6 K 4 | 160 |
| 5 | BM 3 | 40 | 35 (II) | 8,1 | 1,0 K 2 | 150 |

1) Die Herstellung der Bindemittel wird später beschrieben

2) Pigmentrezeptur I:   2 Tle   Farbruß
                      94 Tle   Titandioxid (Rutil)
                      4 Tle   basisches Bleisilikat (ca. 75 Gew.-% Pb)

Pigmentrezeptur II: 100 Tle Titandioxid (Rutil)

(D) Herstellung der in den kathodisch abscheidbaren Elektrotauchlacken eingesetzten Bindemittel

BM 1: In einem geeigneten Reaktionsgefäß werden 220 Tle (1 Mol) Nonylphenol mit 130 Tlen (1 Mol) Diethylaminopropylamin und 100 Tlen Toluol auf 75 °C erwärmt und anschließend unter leichtem Kühlen 33 Tle (1 Mol) Paraformaldehyd, 91 %, zugegeben. Die Temperatur wird langsam gesteigert, bis sich eine azeotrope Destillation einstellt. Nach Abtrennen von 21 Tlen Wasser wird das Toluol im Vakuum abdestilliert und das Produkt in 167 Tlen Diethylenglykoldimethylether gelöst.

Die so erhaltene Lösung wird bei 30 bis 40°C unter Kühlung mit 304 Tlen (1,0 Mol) eines mit 2-Ethylhexanol halbblockierten Toluylendiisocyanats versetzt und die Temperatur von 40°C 1,5 Stunden bis zu einem NCO-Wert von Null gehalten. (Feststoffgehalt 71 Gew.-%)

Anschließend werden 475 Tle eines Epoxidharzes auf Basis von Bisphenol A (Epoxidäquivalentgewicht 475) in 200 Tlen Propylenglykolmonomethylether gelöst und nach Zusatz von 835 Tlen des oben hergestellten Vorproduktes bei 95 bis 100°C bis zu einem Epoxidwert von Null reagiert. (Feststoffgehalt 71 Gew.-%)

BM 2: In einem mit Rührer, Thermometer und Rückflußkühler ausgestatteten Reaktionsgefäß werden 1000 Tle eines Epoxidharzes auf Bisphenol A-Basis (Epoxidäquivalentgewicht ca. 500) in 492 Tlen Ethylglykolacetat bei 60 bis 70°C gelöst. 0,2 Tle Hydrochinon und 144 Tle (2,0 Mol) Acrylsäure zugegeben und die Temperatur auf 100 bis 110°C gesteigert. Die Reaktion wird bei dieser Temperatur bis zu einer Säurezahl von unter 5 mg KOH/g geführt. Anschließend wird das Reaktionsprodukt bei 60 bis 70°C mit 652 Tlen (1,6 Mol) eines Monoisocyanates aus 1 Mol Toluylendiisocyanat und 1 Mol Diethylethanolamin (70 %ig in Methylisobutylketon) versetzt und bis zu einem NCO-Wert von Null reagiert. (Feststoffgehalt 70 Gew.-%)

BM 3: In einem für die Lösungspolymerisation geeigneten Reaktionsgefäß werden 667 Tle Propylenglykolmonomethylether auf 90°C erhitzt. Während 3 Stunden wird eine Mischung, bestehend aus 120 Tlen N,N-Dimethylaminoethylmethacrylat, 240 Tlen 2-Hydroxyethylmethacrylat, 420 Tlen Butylacrylat, 336 Tlen Methylmethacrylat, 84 Tlen 2-Ethylhexylacrylat, 36 Tlen Azobisisobutyronitril und 3,6 Tlen tert. Dodecylmercaptan gleichmäßig zugegeben. 2 Stunden nach dem Ende der Zugabe werden weitere 12 Tle Azobisisobutyronitril zugesetzt. Der Ansatz wird weitere zwei Stunden bei 90°C gehalten. Das Endprodukt weist einen Feststoffgehalt von 65 Gew.-%, eine Aminzahl von 36 mg KOH/g und eine OH-Zahl von 86 mg KOH/g, jeweils bezogen auf Festharz, auf.

123 Tle dieses basischen Acrylatcopolymerisats werden bei 35°C ca. 2 Stunden mit 20 Tlen einer Härtungskomponente entsprechend dem Dispergiermedium (A2) gemischt.

**Patentansprüche**

1. Dibutylzinnoxid-Zubereitungen, dadurch gekennzeichnet, daß sie Dibutylzinnoxid, welches nach mechanischer Dispergierung in einer Teilchengröße von 0,1 bis max. 5 μm vorliegt, und ein verkapptes Polyisocyanat und/oder eine aktivierte Estergruppen tragende Härtungskomponente als Dispergiermedium, welches gegebenenfalls in einem organischen, gegenüber Dibutylzinnoxid reaktionsinerten Lösemittel angelöst ist, enthalten, wobei die Dibutylzinnoxid-Zubereitungen einen Gehalt an Zinn, bezogen auf den Feststoffanteil des Dispergiermediums, von 5 bis 30 Gew.-%, vorzugsweise von 10 bis 20 Gew.-%, aufweisen.

2. Verwendung der Dibutylzinnoxid-Zubereitungen nach Anspruch 1 zur Katalysierung der Vernetzungsreaktionen von durch Umurethanisierung und/oder Umesterung vernetzbaren kationischen Lackbindemitteln.

3. Katalysierte kationische Lacke, insbesonders kathodisch abscheidbare Elektrotauchlacke, auf der Basis von durch Umurethanisierung und/oder Umesterung vernetzbaren kationischen Lackbindemitteln, dadurch gekennzeichnet, daß sie 0,1 bis 3,0 Gew.-%, vorzugsweise 0,5 bis 1,5 Gew.-%, Zinn, bezogen auf den Feststoff des Bindemittels, in Form der Dibutylzinnoxid-Zubereitungen nach Anspruch 1 enthalten.

4. Katalysierte kationische Lacke gemäß Anspruch 3, dadurch gekennzeichnet, daß sie als wesentliche Bindemittel-Komponente kationische modifizierte Epoxidharze enthalten.

5. Katalysierte kationische Lacke gemäß Anspruch 3, dadurch gekennzeichnet, daß sie als wesentliche Bindemittel-Komponente kationische Acrylatcopolymerisate enthalten.

6. Verwendung der Lacke gemäß Anspruch 4 als korrosionsbeständige Grundierungen für Automobile.

7. Verwendung der Lacke gemäß Anspruch 5 als hellfarbige Einschicht- oder Decklacke für Haushaltsgeräte.

## Claims

1. Dibutyltin oxide preparations, characterised in that they comprise dibutyltin oxide, present in a particle size of 0.1 to 5 $\mu$m max. after mechanical dispersion, and, as dispersion medium, a blocked polyisocyanate and/or a curing component bearing activated ester groups which is dissolved, if necessary, in an organic solvent which is chemically inert toward dibutyltin oxide, the dibutyltin oxide preparations having a dibutyltin oxide content of 5 to 30% by weight, preferably of 10 to 20% by weight, based on the tin content and on the solids content of the dispersion medium.

2. Use of the dibutyltin oxide preparations according to Claim 1 in catalysing the crosslinking reactions of cationic paint binders crosslinkable by transurethanisation and/or transesterification.

3. Catalysed cationic paints, especially cathodically depositable electrocoating paints, based on cationic paint binders crosslinkable by transurethanisation and/or transesterification, characterised in that they contain 0.1 to 3.0% by weight, preferably 0.5 to 1.5% by weight, of tin, based on the binder solids, in the form of the dibutyltin oxide preparations according to Claim 1.

4. Catalysed cationic paints according to Claim 3, characterised in that they contain cationic modified epoxy resins as essential binder component.

5. Catalysed cationic paints according to Claim 3, characterised in that they contain cationic acrylate copolymers as essential binder component.

6. Use of the paints according to Claim 4 as corrosion-resistant primers for automobiles.

7. Use of the paints according to Claim 5 as pastel-coloured one-coat paints or top-coat paints for domestic appliances.

## Revendications

1. Préparations d'oxyde de dibutylétain, caractérisées en ce qu'elles contiennent de l'oxyde de dibutylétain qui, après une dispersion mécanique, a une taille de particules de 0,1 à 5 $\mu$m au maximum, et un polyisocyanate bloqué et/ou un constituant de durcissement portant des groupes ester activés comme milieu de dispersion, qui est éventuellement dissous dans un solvant organique inerte vis-à-vis de l'oxyde de dibutylétain, les préparations d'oxyde de dibutylétain ayant une teneur en étain de 5 à 30 % en masse, de préférence de 10 à 20 % en masse, par rapport à la teneur en matière solide du milieu de dispersion.

2. Utilisation des préparations d'oxyde de dibutylétain selon la revendication 1 pour la catalyse des réactions de réticulation de liants de peintures cationiques réticulables par trans-uréthanisation et/ou trans-estérification.

3. Peintures cationiques catalysées, en particulier applicables par électrophorèse déposables à la cathode, à base de liants de peintures cationiques réticulables par trans-uréthanisation et/ou trans-estérification, caractérisées en ce qu'elles contiennent 0,1 à 3,0 % en masse, de préférence 0,5 à 1,5 % en masse d'étain, par rapport à la matière solide du liant, sous forme de préparations d'oxyde de dibutylétain selon la revendication 1.

4. Peintures cationiques catalysées selon la revendication 3, caractérisées en ce qu'elles contiennent des résines époxy modifiées cationiques comme constituant principal du liant.

5. Peintures cationiques catalysées selon la revendication 3, caractérisées en ce qu'elles contiennent des copolymères acrylates cationiques oomme constituant essentiel du liant.

**6.** Utilisation des peintures selon la revendication 4 comme couches de base résistantes à la corrosion pour l'automobile.

**7.** Utilisation des peintures selon la revendication 5 comme émail en une couche ou émail final de couleur claire pour des appareils électroménagers.